Europäisches Patentamt

European Patent Office

Office européen des brevets

(11) Veröffentlichungsnummer: **0 246 554**
**B1**

(12) **EUROPÄISCHE PATENTSCHRIFT**

(45) Veröffentlichungstag der Patentschrift:
25.04.90

(21) Anmeldenummer: 87106928.2

(22) Anmeldetag: 13.05.87

(51) Int. Cl.⁴: **A21D 2/02**, A21D 8/04,
A21D 2/08

(54) Enzymatische Backmittel.

(30) Priorität: 23.05.86 DE 3617473

(43) Veröffentlichungstag der Anmeldung:
25.11.87 Patentblatt 87/48

(45) Bekanntmachung des Hinweises auf die Patenterteilung:
25.04.90 Patentblatt 90/17

(84) Benannte Vertragsstaaten:
AT BE CH DE ES FR LI NL

(56) Entgegenhaltungen:
FR-A- 2 315 852
US-A- 2 992 111
US-A- 3 527 644
US-A- 4 116 772

(73) Patentinhaber: Röhm GmbH, Kirschenallee
Postfach 4242, D-6100 Darmstadt 1(DE)

(72) Erfinder: Reiner, Roland, Dr., Am Oberfeld 19,
D-6100 Darmstadt(DE)
Erfinder: Sprössler, Bruno, Dr., Auf der Schmelz 83,
D-6101 Rossdorf 1(DE)

## Beschreibung

Die Erfindung betrifft enzymatische Backmittel, die als Hauptkomponente einen flüssigen bis pastenförmigen Backemulgator sowie gegebenenfalls Fette und darin dispergiert ein Backenzym erhalten. Ein Nachteil dieser bekannten und gebräuchlichen Backmittel ist der Verlust an enzymatischer Aktivität beim Lagern.

Aus der US-A 3 494 770 sind Backmittel bekannt, die aus einer Mischung einer Pilz-alpha-Amylase und einer Pilzproteinase sowie eines Oxydationsmittels und eines Ammoniumsalzes mit Mehl bestehen. Diese Mittel können auch zusammen mit üblichen Backemulgatoren, wie Calcium-stearyl-2-lactylat oder Natrium-stearyl-fumarat, bei der Teigherstellung verwendet werden. Es ist nicht bekannt, den Backemulgator schon vorher mit den genannten Hilfsmitteln zu vermischen.

Der Erfindung liegt die Aufgabe zugrunde, den Aktivitätsverlust beim Lagern der eingangs erwähnten enzymatischen Backmittel zu vermindern. Dies gelingt erfindungsgemäß durch den Zusatz eines festen säurebindenden Mittels oder eines wasserbindenden Mittels oder dieser beiden Mittel gemeinsam.

Die Erfindung beruht auf der Erkenntnis, daß der allmähliche Verlust an enzymatischer Aktivität auf der Einwirkung von Wasser oder niederen Carbonsäuren oder beiden auf die Enzyme beruht. Diese Einwirkung wird erfindungsgemäß durch wasser- und/oder säurebindende Mittel ausgeschlossen.

Wasser kann aus der Luftfeuchtigkeit in die Backemulgatormischung eindiffundieren oder schon bei der Herstellung der Mischung in dem Backemulgator enthalten sein. Backemulgatoren, die aus Estern niederer Carbonsäuren mit einer Polyhydroxyverbindung bestehen, werden durch Wasser hydrolysiert und setzen dabei niedere Carbonsäuren, wie Essigsäure, Propionsäure, Milchsäure oder Weinsäure frei. Die enzymschädigende Wirkung dieser niederen Carbonsäuren übertrifft diejenige des Wassers und tritt vor allem dann auf, wenn das Enzym durch Wasseraufnahme in einen Zustand höherer Empfindlichkeit übergegangen ist.

Ein in der Backtechnik besonders gebräuchlicher Backemulgator ist Diacetylweinsäureester, dessen hydrolytische Spaltung zur Freisetzung von Essigsäure und Weinsäure führt. Diese Säuren sind in handelsüblichen Backemulgatoren auf dieser Basis fast immer nachweisbar. Die Erfindung hat daher für enzymatische Backmittel, die Diacetylweinsäureester als Backemulgator enthalten, besondere Bedeutung.

Die erfindungsgemäß eingesetzten wasserbindenden Mittel schützen die Backenzyme vor dem schädigenden Einfluß des Wassers. Solange die Enzyme nicht durch Wasser angequollen sind, ist ihre Empfindlichkeit gegenüber niederen Carbonsäuren noch verhältnismäßig gering. Die erfindungsgemäß eingesetzten säurebindenden Mittel haben in der Regel eine höhere Hydrophilie als die Enzyme, so daß sie zugleich eine wasserbindende Wirkung entfalten und auf diersem Wege zum Schutz der Enzyme beitragen.

Die inaktivierende Wirkung der niederen Carbonsäuren kann erfindungsgemäß auf zwei Wegen unterbunden werden. Wasserbindende Mittel nehmen das in dem Backmittel oder dessen Ausgangskomponenten enthaltende Wasser und das aus der Luftfeuchtigkeit eindiffundierende Wasser auf und entziehen es dadurch der Hydrolysereaktion. Die zweite Schutzwirkung geht von den säurebindenden Mitteln aus, die die durch Hydrolyse entstehenden Carbonsäuren abfangen und dadurch deren Einwirkung auf die Enzyme verhindern. Bei Anwesenheit von Backemulgatoren, die Ester niederer Carbonsäuren enthalten, ist die puffernde Wirkung der säurebindenden Mittel die vorherrschende Schutzwirkung. Mit besonderem Vorteil macht man durch Verwendung beider Zusätze von beiden Schutzwirkungen gleichzeitig Gebrauch.

Als säurebindende Festsubstanz eignen sich basische Stoffe oder Pufferverbindungen, die in dem nichtwäßrigen Medium des Backmittels mit freien niederen Carbonsäuren zu reagieren Vermögen und die Konzentration an diesen Säuren unterhalb der für die Enzyme schädlichen Konzentration halten. Sie sollen in feinteiliger Form vorliegen und gleichmäßig verteilt sein.

Geeignete Zusätze sind Puffergemische, welche für den pH-Bereich von 5 bis 8 geeignet sind und lebensmittelrechtlich zugelassen sind. Es ist eine große Zahl solcher Substanzen bekannt (s. "Biochemisches Taschenbuch", Teil II, S. 90ff, Springer Verlag, 1964) und im Handel wohlfeil in entsprechender Reinheit und Korngröße erhältlich.

Geeignete Zusätze mit basischer oder Pufferwirkung sind z.B. die Oxide oder Hydroxide der Alkali- oder Erdalkalimetalle, insbesondere Natrium oder Calcium, und deren Salze mit Säuren, die schwächer als die abzufangenden Carbonsäuren sind. Diese Säuren sollten einen pKa-Wert über 4,5, vorzugsweise über 6,0 haben. Bei mehrbasischen Säuren gilt das gleiche für die höheren Dissoziationsstufen. In einer wäßrigen Lösung dieser säurebindenden Mittel stellt sich ein pH-Wert über 5, vorzugsweise 6 bis 8 ein, jedoch lassen sich diese pH-Werte trotz nachweislicher Wirksamkeit der basischen Zusätze in den damit stabilisierten Backmitteln oft nicht feststellen. Auch die Ammoniumsalze der genannten Säuren sind geeignet.

Beispiele geeigneter säurebindender Zusätze sind Calciumhydroxid, Natriumcarbonat, Kaliumcarbonat, Natriumbicarbonat, Di- und Trinatriumphosphat, Di- und Trikaliumphosphat. Diammoniumhydrogenphosphat, Calciumhydrogenphosphat, Tricalciumphosphat, Ammoniumcarbonat, Ammoniumcarbaminat und Trinatriumcitrat. Als wasserbindende Feststoffe kommen feinteilige Feststoffe in Betracht, die im festen Zustand Wasser chemisch oder adsorptiv binden. Zur ersten Gruppe gehören wasserfreie Salze, die Kristallwasser aufnehmen, wie Natriumsulfat, Calciumsulfat oder Calciumhydroxyd. Zeolithe und wasserfreie Kieselgele gehören zur Gruppe der adsorptiv wasserbindenden Zusätze.

Es versteht sich von selbst, daß nur solche wasser- und säurebindenden Zusätze verwendet werden dürfen, die in der Konzentration, in der sie in Backwaren auftreten, gesundheitlich unbedenklich und gesetzlich zulässig sind. Im übrigen richtet sich die Konzentration nach der erforderlichen schützenden Wirkung während der voraussichtlichen Lagerdauer. Beide Arten von Zusätzen sind wirkungsmäßig erschöpft, wenn sie entsprechend ihrer Kapazität Wasser oder Säure aufgenommen haben. Der Bedarf hängt somit von der Art der Verpackung, den Lagerungsbedingungen, der Lagerdauer und der Empfindlichkeit der Enzyme ab.

In der Regel ist eine Wasserbindungskapazität von 5 bis 100 g Wasser und eine Säurebindungskapazität von 20 bis 400 Milliäquivalenten Säure je Kilogramm des Backmittels ausreichend. Bei gemeinsamer Anwendung können entsprechend niedrigere Mengen eingesetzt werden. Die Gesamtmenge der wasser- und säurebindenden Zusätze liegt beispielsweise zwischen 0,2 und 5 Gew.-%, bezogen auf die fertige Mischung.

Als Backenzyme sind Amylasen, Amyloglukosidasen, Proteasen, Cellulasen, Hemicellulasen aus Microorganismen oder pflanzlicher Herkunft gebräuchlich. Das erfindungsgemäße Backmittel kann ein oder mehrere solche Backenzyme enthalten. Die erfindungsgemäßen Zusätze sind vorteilhaft, wenn auch nur eines der enthaltenen Enzyme säureempfindlich ist. Besonders säureempfindlich sind Amylasen, Protasen, Hemicellulasen, so daß Backmittel mit diesen Enzymen zu den bevorzugten Ausführungsformen der Erfindung gehören.

Der Begriff der Backemulgatoren ist in der Literatur nicht scharf umgrenzt. Man versteht darunter Stoffe, die die Homogenität des Teiges fördern, indem sie auf die Teigbestandteile benetzend wirken und ihre Verträglichkeit verbessern.

Backemulgatoren im Sinne der Erfindung sind keine chemisch einheitlich definierbare Stoffgruppe. Gemeinsames Merkmal der zu dieser Stoffgruppe gehörenden Verbindungen ist der Aufbau des Emulgatormoleküls aus einem unpolaren, lipophilen, hydrophoben Anteil und einem polaren, hydrophilen und lipophoben Anteil. Der hydrophobe Molekülteil wird aus geraden, verzweigten oder zyklischen Kohlenwasserstoffresten gebildet, während der hydrophile Molekülteil aus sehr Verschiedenen polaren Gruppen bestehen kann. Ein weiteres wesentliches Merkmal ist fehlende Toxizität, also gesundheitliche Unbedenklichkeit und gesetzliche Zulässigkeit.

Die grenzflächenaktiven Eigenschaften der Backemulgatoren können unterschiedlich stark ausgeprägt sein. Neben Emulgatoren mit deutlicher Grenzflächenaktivität gehören zum Umfang der Erfindung auch weniger grenzflächenaktive Stoffe, die dem Fachmann als Backemulgatoren bekannt und als solche im Handel sind. Eine umfassende Übersicht über Emulgatoren als Zusatzstoffe für Lebensmittel geben Gregor Schuster und Wolfang Adams in einer 18-teiligen Artikelserie, die in den Jahren 1979 - 1985 in der "Zeitschrift für Lebensmittel-Technologie und Verfahrenstechnik" erschienen ist und die in dem Buch "Emulgatoren für Lebensmittel" der gleichen Autoren (Springer Verlag, 1985) zusammengefaßt ist. Besondere Berücksichtigung erfahren die in Anhang I der Richtlinie des EG-Rates vom 18. Juni 1974 erfaßten Emulgatoren, Stabilisatoren, Verdickungs- und Geliermittel, die in Lebensmitteln verwendet werden dürfen (74/329 EWG) und (78/612 EWG).

Eine bevorzugte Klasse von Backemulgatoren sind die mit Essigsäure, Propionsäure, Milchsäure, Zitronensäure, Weinsäure, Monoacetylweinsäure und Diacetylweinsäure veresterten Mono- und Diglyceride von Speisefettsäuren. In der Praxis sind vor allem die Ester der Mono- und Diglyceride mit Diacetylweinsäure von herausragender Bedeutung und sind daher auch im Sinne der Erfindung bevorzugt. Aus diesen esterartigen Backemulgatoren können die genannten niederen Carbonsäuren hydrolytisch abgespalten werden und üben dann einen schädigenden Einfluß auf die im Gemisch mit den Backemulgatoren vorliegenden Backenzyme aus.

Der Emulgator kann herstellungs- oder lagerungsbedingt 0,1 bis 2 Gew.-% Wasser enthalten, wodurch in Abwesenheit der erfindungsgemäßen Zusätze ein rascher Aktivitätsverlust eintreten würde. In den Backmitteln der Erfindung können solche Wassermengen toleriert werden, wenn die Menge der Zusätze ausreichend hoch bemessen ist, um entweder dieses Wasser oder die durch seine hydrolytische Wirkung entstandene Carbonsäure zu binden. Der Bindungsprozeß kann sich über längere Zeit erstrecken.

In der Regel ist der Gewichtsanteil der wasser- und säurebindenden Zusätze größer als das der Enzyme. Beide zusammen machen z.B. 0,1 bis 25 Gew.-% der fertigen Backmischung aus.

Die Enzyme und die wasser- oder säurebindenden Zusätze können als feinteilige Feststoffe in den flüssigen bis pastösen Backemulgatoren gleichmäßig verteilt werden. Vorteilhafter ist es, zunächst die Enzyme mit den wasser- oder säurebindenden Mitteln zu einem Pulverprodukt zu verarbeiten, in dem die Komponenten mechanisch aneinander haften, so daß sie beim Dispergieren in dem Backemulgator nicht voneinander getrennt werden. Beispielsweise kann das säurebindende Mittel in die Enzymlösung gegeben und mit dieser zu einem Pulver sprühgetrocknet werden.

Ein besonders wirksamer Schutz des Backenzyms durch das säure- oder wasserbindende Mittel wird erreicht, wenn der eine dieser Bestandteile den Kern der Partikel und der andere Bestandteil eine den Kern umschließende Hülle bildet. Der Kern kann beispielsweise einen Durchmesser von 20 bis 150 µm und die Hülle eine Dicke von 10 bis 100 µm haben. Ein solcher Aufbau wird erreicht, wenn man das parti-

EP 0 246 554 B1

kelförmige Kernmaterial in einer an sich bekannten Wirbelschichtanlage aufwirbelt und mit einer Lösung oder Suspension des Hüllenmaterials beschichtet. In der Regel wird eine wäßrige Lösung oder Suspension eingesetzt. In diesem Falle ist es schwierig, ein wasserbindendes Material als eine der Komponenten zu verarbeiten; das Verfahren eignet sich vorwiegend zur Verarbeitung eines säurebindenden Mittels als Kern- oder Hüllmaterial.

Man kann zum Beispiel auf Partikel des säurebindenden Materials eine wäßrige Enzymlösung im Wirbelschichtverfahren aufsprühen und bei einer Lufttemperatur von 35 bis 100 Grad Celsius trocknen. Es ist vorteilhaft, die dabei entstehende Enzymhülle durch eine weitere äußere Hülle aus einem wasserlöslichen festen Material zu überziehen. Dies kann in einem weiteren Arbeitsgang in der gleichen Wirbelschichtanlage geschehen, in der die Enzymhülle aufgebracht worden ist. Die weitere Hülle kann z.B. 10 bis 100 µm dick sein. Sie kann aus dem gleichen oder einem anderen säurebindenden Material wie der Kern bestehen, jedoch eignen sich auch andere feste wasserlösliche Stoffe ohne wasser- oder säurebindende Wirkung, wie Stärke, Dextrin, Polyäthylenoxid (Polywachs) oder Lecithin-Öl-Gemische. Diese Mittel können ebenfalls in Form einer wäßrigen Lösung, Suspension bzw. Dispersion im Wirbelschichtverfahren aufgebracht werden.

Die äußere Hülle, die einen zusätzlichen Schutz des Backenzyms darstellt, ist entbehrlich, wenn das Backenzym selbst in Partikelform als Kernmaterial eingesetzt und im Wirbelschichtverfahren mit dem säurebindenden Mittel umhüllt wird.

Die mehrschichtigen Partikel werden dann in den Backemulgator eingearbeitet. Dabei kann zusätzlich ein wasserbindendes Mittel mitverarbeitet werden. Es ist zweckmäßig, den Backemulgator im schmelzflüssigen Zustand, z.B. bei Temperaturen von 40 bis 60 Grad Celsius, mit dem partikelförmigen Material zu vermischen und dem Mischvorgang mittels einer geeigneten Mischvorrichtung bis zur Abkühlung etwa auf Raumtemperatur fortzusetzen.

Beispiele

I. Herstellung partikelförmiger Pilzamylasepulver

A. Kernmaterial aus Puffersalz, Hüllmaterial aus Pilzamylase.

500 g Trinatriumphosphat mit einem Korndurchmesser von 20 bis 50 um werden im Wirbelschichtgranulator mit auf 80 Grad C vorgewärmter Luft auf 38 Grad - 40 Grad C unter Verwirbelung aufgewärmt.
1 l Aspergillus-Pilzamylase-Lösung (10 % Trockensubstanz,
5000 SKB/g-Amylaseaktivität) werden durch eine Düse so aufgesprüht, daß die Abluft eine Temperatur von etwa 40 Grad C hat. Man erhält 600 g Enzymprodukt mit einer Aktivität von 7 500 SKB/g.

B. Wie A, aber mit zusätzlicher Hüllschicht. Das nach A hergestellte Produkt wird im Wirbelschichtgranulator unter den oben beschriebenen Bedingungen mit 500 ml 10-%iger Maltodextrinlösung besprüht. Man erhält 650 g Enzymprodukt mit 6 900 SKB/g, das als Kernmaterial Puffersalz, als Zwischenschicht das Enzym und als äußere Hülle Dextrin enthält.

C. Kernmaterial aus Enzympartikel, Hüllschicht aus Puffersalz Man legt im Wirbelschichtgranulator 250 g eines pulverförmigen Pilzamylase-Maltodextrin-Gemisches mit 20 000 SKB/g vor, erwärmt durch 80 Grad C warme Luft auf ca. 40 Grad C und sprüht 500 ml 20%-ige Trinatriumphosphat-Lösung so auf, daß die Ablauft-Temperatur ca. 40 Grad C beträgt.
Man erhält ca. 350 g Enzymprodukt, mit 14 000 SKB/g Amylaseaktivität, das als Kernsubstanz das Enzym und als Hüllmaterial Puffersalz enthält.

D. Herstellung partikelförmiger Backenzyme als Pulvermischungen.

Je 500 g eines Amylasepulvers, enthaltend 100 g Amylasekonzentrat und 400 g Maltodextrin, mit einer Amylaseaktivität von 8 000 SKB/g werden mit je 500 g Trinatriumphosphat, Dikalium-hydrogenphosphat, Natriumcarbonat, Natriumhydrogencarbonat, wasserfreiem Natriumsulfat und Trinatrium-citrat trocken vermischt unter Erhalt von fünf Pulvermischungen, die als D1 bis D6 bezeichnet werden.

II. Herstellung von Backmitteln

Es wird ein pastenförmiger technischer Backemulgator verwendet, der 20 Gew.-% Mono- und Diglyceride von Speisefettsäuren, 10 Gew.-% von deren Diacetylweinsäureestern, 30 Gew.-% Glucose und 1,5 Gew.-% Wasser enthält.
Jeweils 1 kg dieses Backemulgators wird durch Erhitzen auf 60 Grad C unter Rühren geschmolzen und jeweils 14 g der gemäß A bis D hergestellten pulverförmigen Amylaseprodukte unter Rühren eingetragen und vermischt. Man läßt unter weiterem Rühren auf Zimmertemperatur abkühlen. Zum Vergleich werden in einem weiteren Ansatz 7 g des in D verwendeten Amylasepulvers ohne weitere Zusätze in gleicher Weise mit 1 kg des Backemulgators vermischt.
In der nachfolgenden Tabelle ist die Amylase-Restaktivität nach einer Lagerzeit von 30 und 110 Tagen bei Raumtemperatur, jeweils bezogen auf die eine Stunde nach dem Vermischen und Abkühlen gemessene Aktivität ( = 100 %) angegeben.

| Pulverförmiges Enzymprodukt | | Restaktivität in % nach | | |
|---|---|---|---|---|
| Beispiel | Zusatz | 1 Std. | 30 Tagen | 110 Tagen |
| — | ohne | 90 | 0 | 0 |
| A | $Na_3PO_4$ | 100 | 95 | 80 |
| B | $Na_3PO_4$ | 100 | 88 | 75 |
| C | $Na_3PO_4$ | 100 | 84 | 72 |
| D1 | $Na_3PO_4$ | 100 | 90 | 75 |
| D2 | $K_2HPO_4$ | 100 | 80 | 50 |
| D3 | $Na_2CO_3$ | 100 | 95 | 60 |
| D4 | $NaHCO_3$ | 100 | 90 | 62 |
| D5 | $Na_2SO_4$, wasserfrei | 70 | 40 | 20 |
| D6 | Tri-Na-citrat | 100 | 75 | 40 |

## Patentansprüche

1. Backmittel, enthaltend einen flüssigen bis pastenförmigen Backemulgator als Hauptbestandteil und wenigstens ein darin partikelförmig dispergiertes Backenzym, gekennzeichnet durch den zusätzlichen Gehalt an einem festen, säurebindenden und/oder einem festen wasserbindenden Mittel.

2. Backmittel nach Anspruch 1, dadurch gekennzeichnet, daß die in dem Backemulgator verteilten Partikel sowohl das Backenzym als auch die säure- oder/und wasserbindenden Mittel enthalten.

3. Backmittel nach Anspruch 2, dadurch gekennzeichnet, daß der eine Bestandteil den Kern der Partikel und der andere Bestandteil eine den Kern umschließende Hülle bildet.

4. Backmittel nach Anspruch 3, dadurch gekennzeichnet, daß der Kern aus dem säurebindenden Mittel und die Hülle aus dem Enzym besteht.

5. Backmittel nach Anspruch 4, dadurch gekennzeichnet, daß die Partikel eine weitere äußere Hülle aus einem wasserlöslichen festen Material enthalten.

6. Backmittel nach Anspruch 5, dadurch gekennzeichnet, daß die äußere Hülle aus einem Zucker, aus Stärke, Dextrin, Polyäthylenoxid oder einem wasserlöslichen synthetischen Vinylpolymer besteht.

7. Backmittel nach Anspruch 3, dadurch gekennzeichnet, daß der Kern aus dem Enzym und die Hülle aus dem säurebindenden Material besteht.

8. Backmittel nach den Ansprüchen 1 bis 7, dadurch gekennzeichnet, daß es 0,1 bis 25 Gew.-% der Mischung aus dem Backenzym und dem säure- und/oder wasserbindenden Mittel enthält.

9. Backmittel nach den Ansprüchen 1 bis 8, dadurch gekennzeichnet, daß es als Backemulgator einen Ester von einem Mono- oder Diglycerid einer Speisefettsäure mit Essigsäure, Propionsäure, Milchsäure, Zitronensäure, Weinsäure, Monoacetylweinsäure oder/und Diacetylweinsäure enthält.

10. Backmittel nach den Ansprüchen 1 bis 9, dadurch gekennzeichnet, daß es 0,1 bis 2 % Wasser enthält.

11. Verfahren zur Herstellung des Backmittels gemäß den Ansprüchen 1 bis 10 durch Dispergieren des partikelförmigen Backenzyms in dem Backemulgator, dadurch gekennzeichnet, daß man den Backemulgator mit einem Wassergehalt zwischen 0,1 und 2% mit einem festen säure- und/oder wasserbindenden Mittel und dem partikelförmigen Backenzym vermischt.

12. Verfahren nach Anspruch 11, dadurch gekennzeichnet, daß man den Backemulgator im schmelzflüssigen Zustand mit dem Backenzym und dem säure- oder/und wasserbindenden Mittel vermischt.

13. Verfahren nach Anspruch 12, dadurch gekennzeichnet, daß man den Backemulgator im schmelzflüssigen Zustand mit Partikeln, die sowohl das Backenzym als auch das säure- und/oder wasserbindende Mittel enthalten, vermischt.

14. Verfahren nach Anspruch 13, dadurch gekennzeichnet, daß man den Backemulgator im schmelzflüssigen Zustand mit Partikeln vermischt, die den einen Bestandteil als Kern und den anderen Bestandteil als eine den Kern umschließende Hülle enthalten.

15. Verfahren nach Anspruch 14, dadurch gekennzeichnet, daß das den Kern bildende partikelförmige Mittel im Wirbelschichtverfahren mit einer Lösung oder Suspension des die Hülle bildenden Mittels beschichtet wird und das so erzeugte Mittel mit dem schmelzflüssigen Backemulgator vermischt wird.

16. Verfahren nach Anspruch 15, dadurch gekennzeichnet, daß bei dem Wirbelschichtverfahren säurebindendes partikelförmiges Kernmaterial mit einer Lösung oder Suspension des Backenzyms beschichtet wird.

17. Verfahren nach Anspruch 16, dadurch gekennzeichnet, daß anschließend eine weitere Hülle aus einem wasserlöslichen festen Material im Wirbelschichtverfahren aufgebracht wird.

## Claims

1. Baking agent containing a liquid to paste-like baking emulsifier as main constituent and at least one baking enzyme dispersed like particles therein, characterised by additionally containing a solid, acid-binding and/or a solid water-binding agent.

2. Baking agent according to claim 1, characterised in that the particles distributed in the baking emulsifier contain both the baking enzyme and the acid-binding and/or water-binding agent.

3. Baking agent according to claim 2, characterised in that one constituent forms the core of the particles and the other constituent forms a shell surrounding the core.

4. Baking agent according to claim 3, characterised in that the core consists of the acid-binding agent and the shell consists of the enzyme.

5. Baking agent according to claim 4, characterised in that the particles contain a further outer shell of a water-soluble solid material.

6. Baking agent according to claim 5, characterised in that the outer shell consists of a sugar, of a starch, dextrin, polyethylene oxide or a water-soluble synthetic vinyl polymer.

7. Baking agent according to claim 3, characterised in that the core consists of the enzyme and the shell consists of the acid-binding material.

8. Baking agent according to claims 1 to 7, characterised in that it contains 0.1 to 25 wt.% of the mixture of the baking enzyme and the acid-binding and/or water-binding agent.

9. Baking agent according to claims 1 to 8, characterised in that it contains an ester of a monoglyceride or diglyceride of an edible fatty acid with acetic acid, propionic acid, lactic acid, citric acid, tartaric acid, monoacetyltartaric acid and/or diacetyltartaric acid, as baking emulsifier.

10. Baking agent according to claims 1 to 9, characterised in that it contains 0.1 to 2% water.

11. Process for the preparation of the baking agent according to claims 1 to 10 by dispersing the particle-like baking enzyme in the baking emulsifier, characterised in that the baking emulsifier having a water content between 0.1 and 2% is mixed with a solid acid-binding and/or water-binding agent and the particle-like baking enzyme.

12. Process according to claim 11, characterised in that the baking emulsifier in the molten state is mixed with the baking enzyme and the acid-binding and/or water-binding agent.

13. Process according to claim 12, characterised in that the baking emulsifier in the molten state is mixed with particles which contain both the baking enzyme and the acid-binding and/or water-binding agent.

14. Process according to claim 13, characterised in that the baking emulsifier in the molten state is mixed with particles which contain one constituent as the core and the other constituent as a shell surrounding the core.

15. Process according to claim 14, characterised in that the particle-like agent forming the core is coated with a solution or suspension of the agent forming the shell in a fluidised bed process, and the agent thus produced is mixed with the molten baking emulsifier.

16. Process according to claim 15, characterised in that acid-binding particle-like core material is coated with a solution or suspension of the baking enzyme in a fluidised bed process.

17. Process according to claim 16, characterised in that a further shell of a water-soluble solid material is subsequently applied in a fluidised bed process.

## Revendications

1. Agent de cuisson, contenant un émulsifiant de cuisson liquide à pâteux comme constituant principal et au moins une enzyme de cuisson qui y est dispersé à l'état de particules, caractérisé en ce qu'il contient en outre un agent solide fixant les acides et/ou un agent solide fixant l'eau.

2. Agent de cuisson selon la revendication 1, caractérisé en ce que les particules réparties dans l'émulsifiant de cuisson contiennent à la fois l'enzyme de cuisson et les agents fixant les acides et/ou l'eau.

3. Agent de cuisson selon la revendication 2, caractérisé en ce qu'un constituant forme le noyau des particules et l'autre constituant forme une enveloppe qui engaine le noyau.

4. Agent de cuisson selon la revendication 3, caractérisé en ce que le noyau est constitué par l'agent fixant les acides et l'enveloppe est constituée par l'enzyme.

5. Agent de cuisson selon la revendication 4, caractérisé en ce que les particules contiennent une autre enveloppe extérieure faite d'une matière solide soluble dans l'eau.

6. Agent de cuisson selon la revendication 5, caractérisé en ce que l'enveloppe extèrieure est faite d'un sucre, d'amidon, de dextrine, d'oxyde de polyéthylène ou d'un polymère vinylique synthétique soluble dans l'eau.

7. Agent de cuisson selon la revendication 3, caractérisé en ce que le noyau est constitué par l'enzyme et l'enveloppe par la matière fixant les acides.

8. Agent de cuisson selon l'une quelconque des revendications 1 à 7, caractérisé en ce qu'il contient de 0,1 à 25%, en poids du mélange de l'enzyme de cuisson et de l'agent fixant les acides et/ou l'eau.

9. Agent de cuisson selon l'une quelconque des revendications 1 à 8, caractérisé en ce qu'il contient,

6

en tant qu'émulsifiant de cuisson, un ester d'un mono- ou diglycéride d'un acide gras alimentaire avec l'acide acétique, l'acide propionique, l'acide lactique, l'acide citrique, l'acide tartrique, l'acide monoacétyltartrique et/ou l'acide diacétyltartrique.

10. Agent de cuisson selon l'une quelconque des revendications 1 à 9, caractérisé en ce qu'il contient de 0,1 a 2% d'eau.

11. Procédé de préparation de l'agent de cuisson selon l'une quelconque des revendications 1 à 10 par dispersion de l'enzyme de cuisson à l'état de particules dans l'émulsifiant de cuisson, caractérisé en ce qu'on mélange l'émulsifiant de cuisson ayant une teneur en eau comprise entre 0,1 et 2% avec un agent solide fixant les acides et/ou l'eau et avec l'enzyme de cuisson à l'état de particules.

12. Procédé selon la revendication 11, caractérisé en ce qu'on mélange émulsifiant de cuisson à l'état fondu avec l'enzyme de cuisson et l'agent fixant les acides et/ou l'eau.

13. Procédé selon la revendication 12, caractérisé en ce qu'on mélange l'émulsifiant de cuisson à l'état fondu avec des particules qui contiennent à la fois l'enzyme de cuisson et l'agent fixant les acides et/ou l'eau.

14. Procédé selon la revendication 13, caractérisé en ce qu'on mélange l'émulsifiant de cuisson à l'état fondu avec des particules qui contiennent l'un des constituants en tant que noyau et l'autre constituant en tant qu'enveloppe engainant le noyau.

15. Procédé selon la revendication 14, caractérise en ce que l'agent en forme de particules constituant le noyau est revêtu par le procédé en couche fluidisée d'une solution ou suspension formant l'enveloppe et en ce que l'agent ainsi obtenu est mélangé avec l'émulsifiant de cuisson à l'état fondu.

16. Procédé selon la revendication 15, caractérisé en ce qu'une matière de noyau en forme de particules fixant les acides est revêtue, par le procédé en couche fluidisée, d'une solution ou suspension de l'enzyme de cuisson.

17. Procédé selon la revendication 16, caractérisé en ce qu'une autre enveloppe en une matière solide soluble dans l'eau est ensuite appliquée par le procédé en couche fluidisée.